# EUROPEAN PATENT SPECIFICATION

(11) **EP 2 850 930 B1**
(45) Date of publication and mention of the grant of the patent: **18.07.2018**
(21) Application number: 14174875.6
(22) Date of filing: 30.06.2014
(51) Int. Cl.: A01D 34/64, A01D 69/03

(54) **Working vehicle**
Nutzfahrzeug
Véhicule de travail

(30) Priority: 24.09.2013 JP 2013197037
(43) Date of publication of application: 25.03.2015
(73) Proprietor: ISEKI & CO., LTD., Matsuyama-shi Ehime-ken (JP)
(72) Inventor: Tsunashima, Taro, Ehime-ken (JP); Kitahara, Yusuke, Ehime-ken (JP); Okamoto, Suguru, Ehime-ken (JP); Goto, Renshi, Ehime-ken (JP)
(74) Representative: Nordmeyer, Philipp Werner

(56) References cited:
- EP-A1- 2 850 931
- US-A1- 2006 272 496
- US-A1- 2009 025 997
- US-B1- 7 383 913

## Description

### BACKGROUND

### 1. Field of the Invention

The invention relates to a working vehicle such as a riding type lawn mower, and more particularly to, a vehicle having hydraulic motors provided for all wheels.

### 2. Description of the Related Art

A riding type lawn mower has been known which drives respective hydraulic motors, which are individually provided for all wheels, by one hydraulic pump (for example, JP-A-2008-221861 and JP-A-2002-219959).

The riding type lawn mower is configured to control rotation of the hydraulic pump, based on an operation of a traveling operation member such as a traveling operation lever, forward and reverse pedals and the like, thereby obtaining a predetermined number of revolutions in the hydraulic motors.

The hydraulic pump or a hydraulic pump unit having combined the hydraulic pump and peripheral devices is arranged at an appropriate position of a traveling vehicle body. However, a volume thereof is increased and a weight thereof is heavy, which influence a vehicle body balance. Also, the arrangement configuration of an operation system, which interlocks with the traveling operation member, influences a maintenance ability.

US 2009/0025997 A1 describes a cooling system of a hydraulically driven working vehicle. US 2006/0272496 A1 describes a HST unit including a pair of hydraulic motor units and a hydraulic pump unit forming a traveling hydrostatic transmission. US 7,383,913 B1 describes a hydraulic transaxle incorporating a hydraulic motor.

### SUMMARY

The invention is to provide a working vehicle capable of improving a maintenance ability without deteriorating a vehicle body balance.

The invention has been made keeping in mind the above situation and is configured as follows.

According to the invention, there is provided a working vehicle according to claim 1. According to a preferred embodiment of the invention, in the working vehicle the rear wheel support frame 20 that comes close to a rear of an engine 13 and oscillates around a pivot shaft 19 having the shaft center of a front-rear direction is provided; and the rear wheels are supported to both sides of the wheel support frame 20 so that the rear wheels are steering-interlocked in a left or right direction by a steering mechanism S.

According to the above configurations, the hydraulic pump unit P is arranged above the axle support frame 20. Therefore, it is possible to support the hydraulic pump unit P by using the frame part that is rigidly configured by the axle support frame 20 or pivot shaft 19 support configuration.

According to a preferred embodiment of the invention, the working vehicle further includes: a pair of frame parts 16, 16 connected to left and right sides of the engine 13 and opposed to each other in a left-right direction; and a first vertical plate 40 connecting the pair of frame parts 16, 16, wherein the hydraulic pump unit P is detachably mounted to an upper part of the first plate 40.

The hydraulic pump unit P is mounted to the first vertical plate 40. Therefore, it is possible to arrange the hydraulic pump unit P with the first plate 40 being
interposed between the engine 13 and the hydraulic pump unit P. Also, since the first plate 40 is arranged in the vertical direction, it is possible to arrange the hydraulic pump unit P in the vicinity of the engine 13.

According to a preferred embodiment of the invention, the working vehicle further includes an input pulley 35 configured to interlock with a crankshaft 22 of the engine 13 and drive the hydraulic pump unit P through a pump input shaft (36), wherein the input pulley 35 is supported at a side at which the engine 13 is present and which is opposite to the side of the first vertical plate 40, to which the hydraulic pump unit P is mounted.

The power is transmitted from the crankshaft 22 of the engine 13 positioned at the lower to the input pulley 35 positioned at the upper, so that it is possible to prevent a space from being enlarged in the front-rear direction and to compactly configure the arrangement in the front-rear direction. Also, although the engine 13 is arranged at the lower to thus stabilize the vehicle body balance, even when the hydraulic pump unit P is positioned at the upper and the engine and the hydraulic pump unit deviate from each other in an upper-lower direction, the engine 13-side output pulley 33 and the hydraulic pump-side input pulley 35 can be arranged vertically each other, so that the space is not increased in the front-rear direction.

According to a preferred embodiment of the invention, the working vehicle further includes an end portion of the pivot shaft 19 supported below the first vertical plate 40, wherein the other end of the pivot shaft 19 is supported by a second vertical plate 41 that is appropriately spaced from the first plate 40.

The first and second plates 40, 41 are vertically configured by using the frame parts 16, 16 supporting the engine 13 as bases, so that the pivot shaft 19 of the axle 20 is supported. Thereby, the configuration becomes simpler and the axle 20 can be arranged at a position close to the engine 13.

According to a preferred embodiment of the invention, the working vehicle further includes a trunnion shaft 42 upwardly arranged on a casing upper surface of the hydraulic pump unit P; and a neutral return mechanism N provided at a side of the hydraulic pump unit P; wherein the trunnion shaft 42 and the neutral return mechanism N are linked.

The trunnion shaft 42 and the neutral return mechanism N are arranged on an upper surface of the hydraulic pump unit and in the vicinity thereof, so that the maintenance operation can be made from the upper surface.

According to the invention, the working vehicle includes a gear pump 55, wherein the pump input shaft 36 of the hydraulic pump unit P is configured to drive a gear pump shaft 56. Preferably the gear pump 55 is detachably mounted to a side of the hydraulic pump unit P. The gear pump 55 that is mounted to the side surface of the hydraulic pump unit P for traveling is used as a driving source for lifting up and down an operating machine, for example, independently of the pressure oil supply by the hydraulic pump unit P for traveling. The gear pump is directly mounted to the side surface of the hydraulic pump unit P for traveling, so that the gear pump shaft 56 is driven by receiving the power from the pump input shaft 36 of the hydraulic pump unit P.

According to the invention, it is possible to implement a support structure of the hydraulic pump unit P by the simple configuration and to provide a working vehicle capable of improving a maintenance ability without deteriorating a vehicle body balance.

### BRIEF DESCRIPTION OF THE DRAWINGS

The present invention will become more fully understood from the detailed description given hereinbelow and the accompanying drawing which is given by way of illustration only, and thus is not limitative of the present invention and wherein:
Fig. 1 is an overall side view of a riding type lawn mower;
Fig. 2 is an overall plan view of the riding type lawn mower;
Fig. 3 is an overall rear view of the riding type lawn mower;
Fig. 4 is a plan view of an engine and a power transmission case;

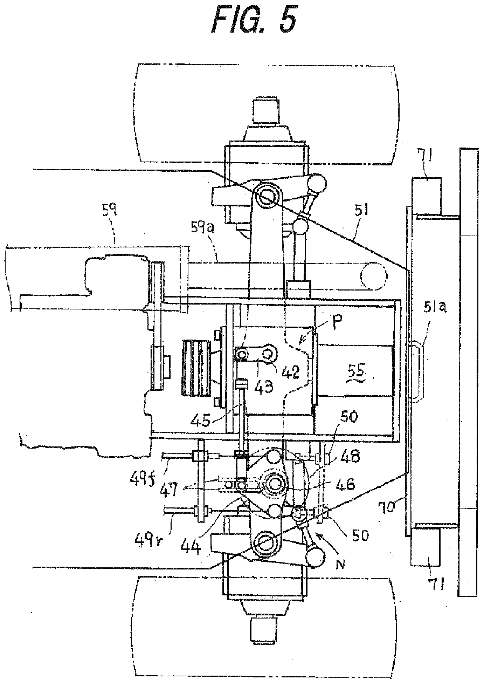

Fig. 5 is a side view of main parts;

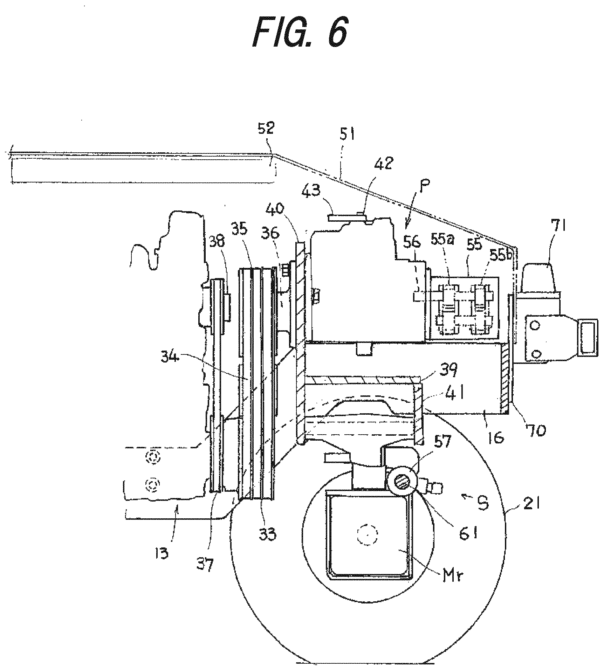

Fig. 6 is a plan view of main parts;

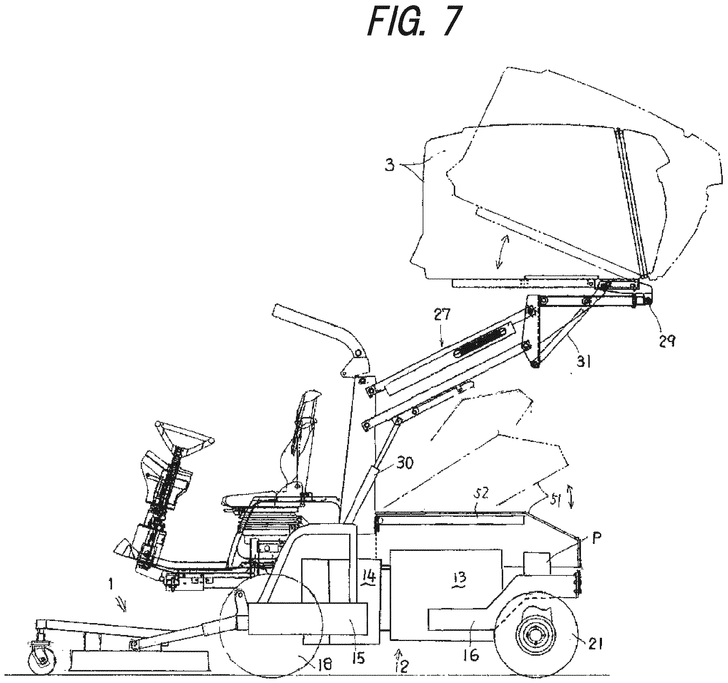

Fig. 7 is an overall side view upon lifting-up of a collector; and

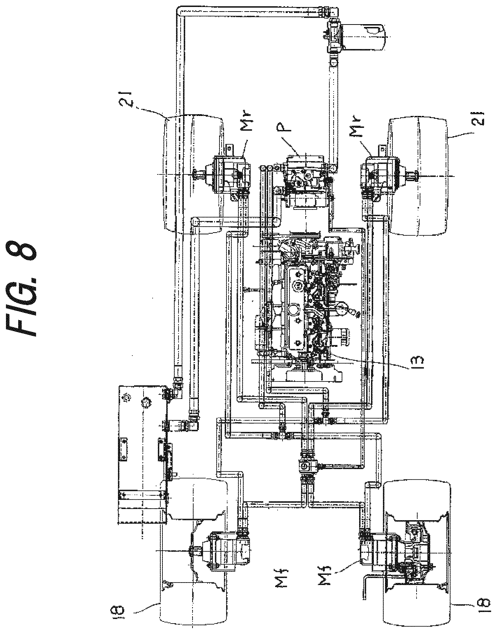

Fig. 8 is a traveling hydraulic circuit diagram.

### DETAILED DESCRIPTION OF THE INVENTION

Hereinafter, an illustrative embodiment of the invention will be specifically described with reference to the drawings.

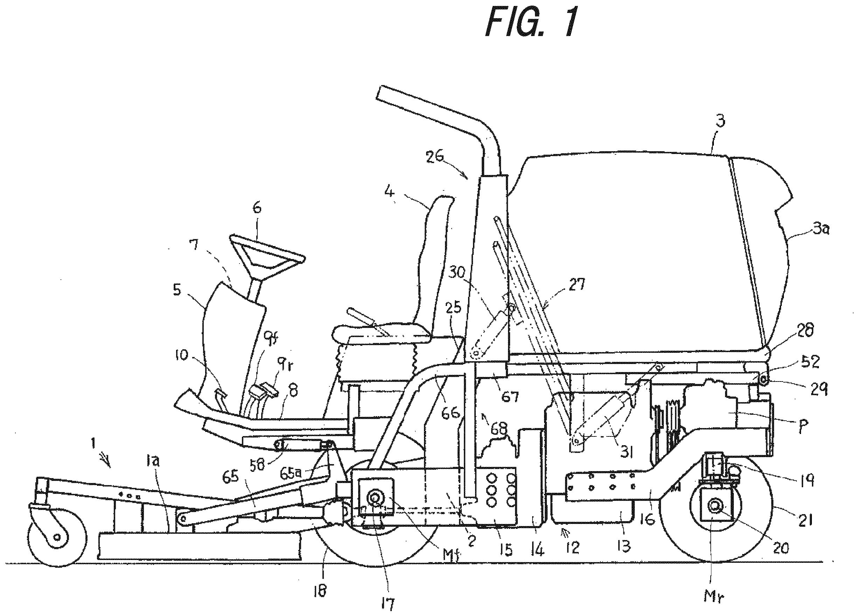

First, configurations and operations of a riding type lawn mower, which is a type of a working vehicle, will be specifically described with reference to Figs. 1 to 4.

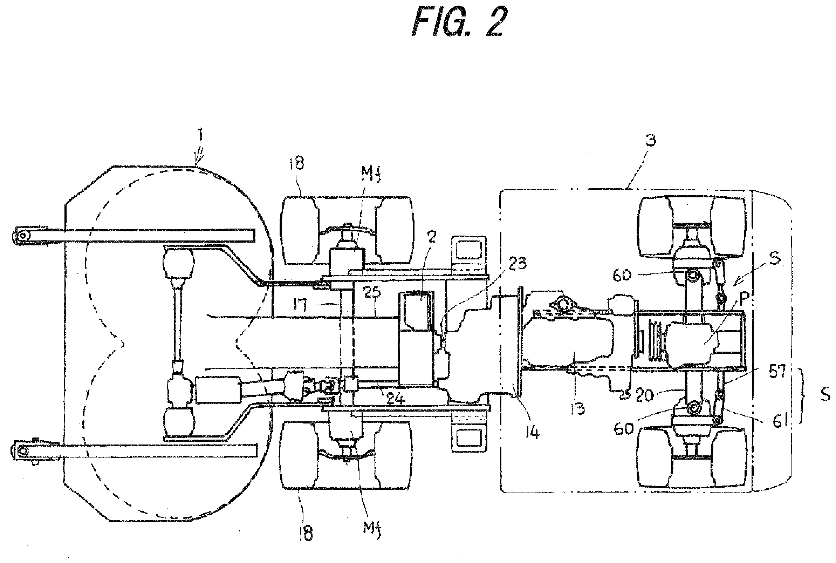

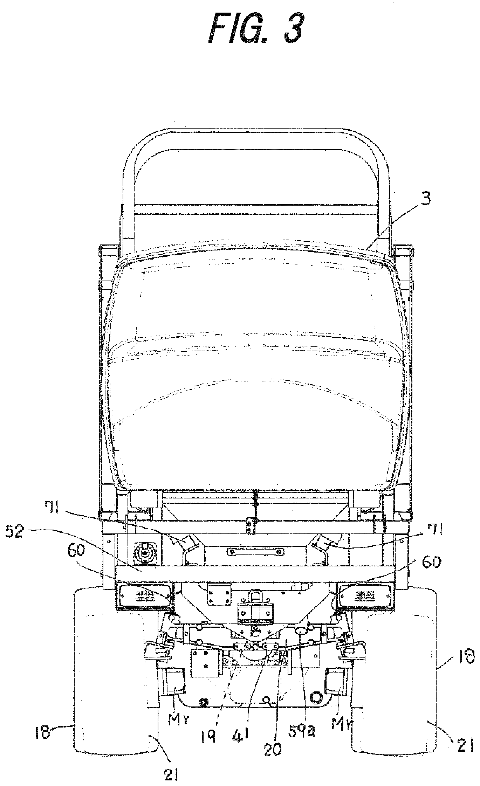

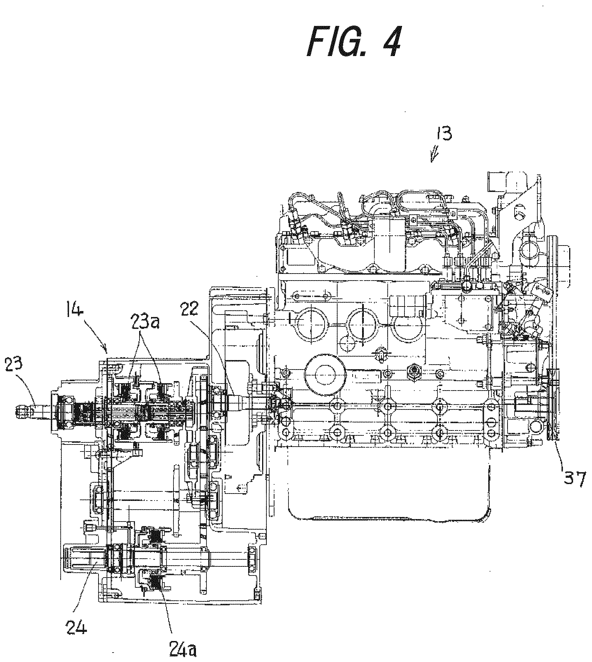

Here, Fig. 1 is a left side view of a riding type lawn mower that is an illustrative embodiment of the invention, Fig. 2 is a plan view of the riding type lawn mower that is an illustrative embodiment of the invention, Fig. 3 is a rear view of the riding type lawn mower that is an illustrative embodiment of the invention and Fig. 4 is a pictorial partial plan view of the riding type lawn mower that is an illustrative embodiment of the invention.

The riding type lawn mower of this illustrative embodiment has a mower 1 that is liftably connected to a front-lower part of a vehicle body and harvests lawns, a blower 2 that conveys the mowed lawns and a collector 3 that accommodates therein the mowed lawns.

A front part of the vehicle body is provided with a driver seat 4 so that an operator drives the lawn mower. A steering wheel post 5, which is provided at the front of the driver seat, is mounted with a steering wheel 6 and a console panel 7 so that the operator makes a steering operation. Forward and reverse pedals 9f, 9r, a brake pedal 10 and the like are mounted on a step 8.

A vehicle body frame 12 that supports the driver seat 4, the steering wheel post 6, the step 8 and the like is configured by connecting an engine 13 of the rear, a power transmission case 14 integrated with the engine 13, front frame parts 15 and rear frame parts 16. That is, rear side parts of the pair of left and right front frame parts 15, 15 are connected to left and right surfaces of the power transmission case 14, front side parts of the pair of rear frame parts 16, 16 are connected to left and right surfaces of the engine 13 and the engine is directly mounted on a rear side part of the power transmission case 14 with a spacer being interposed therebetween, so that the vehicle body frame 12 is configured. In the meantime, a front axle 17 is provided to connect the front frame parts 15, 15 and left and right front wheels 18, 18 are provided at both sides of the front axle 17 with hydraulic motors Mf, Mf being interposed therebetween.

In the meantime, since the power transmission case 14 and the front and rear parts of the engine 13 are separate members from the front frame parts 15 and the rear frame parts 16, the power transmission case 14 and the engine 13 are connected to each other.

Also, the rear frame parts 16, 16 are configured to be slightly narrower than the front frame parts and are formed so that a rear half part thereof is higher than a front half part, when seen from the side, and a rear axle 20 is swingably mounted to the rear frame parts 16, 16 via a pivot shaft 19. Both sides of the rear axle 20 are provided with rear wheels 21, 21 with hydraulic motors Mr, Mr being interposed therebetween. In the meantime, a hydraulic pump unit P that supplies pressure oil to the hydraulic motors Mf, Mf, Mr, Mr driving the front wheels 18, 18 and the rear wheels 21, 21, respectively, is mounted at the rear of the engine 13, as described later.

The power transmission case 14 inputs power, which is generated by the engine 13, from a front end side of a crankshaft 22 and interlocks a first power transmission output shaft 23, which is provided at the center in a left-right direction and a second power transmission output shaft 24, which is provided at one of the left and right sides. The first power transmission output shaft 23 drives the blower 2 and the second power transmission output shaft 24 transmits the power to the mower 1.

The mower 1 and a blower case 2a that accommodates therein the blower 2 communicate with each other by a conveyance chute 25 that conveys the mowed lawns. A rear end side of the conveyance chute 25 is directed towards a front opening of the collector 3.

Both left and right sides of the vehicle main body are provided with support struts 26 that are provided to stand. A front end of a lifting link mechanism 27 that enables a dump operation of the collector 3 is connected to the support struts 26, 26. A frame member 28 that is provided at a tip side of the lifting link mechanism 27 and can be moved in parallel is configured to dump-rotate a rear end-lower part of the collector 3 by a support shaft 29 that passes in the left-right direction. The lifting link mechanism 27 is configured to lift up the collector 3 by an expansion operation of a lifting cylinder mechanism 30 that is provided along the support struts 26 and can be expanded and contracted and to rotate a collector door 3a at the rear side part by an expansion operation of a dump cylinder mechanism 31 about an upper support point in a rear-upper direction, thereby opening a rear part of the collector 3.

The power from a rear end portion of the crankshaft 22 of the engine 13 is transmitted to the hydraulic pump unit P through an output pulley 33, a power transmission belt 34, an input pulley 35 and a pump input shaft 36 and is configured to drive a piston pump and a charge pump (all of which are not shown) embedded therein by the received power, thereby supplying the predetermined pressure oil. The pressure oil is supplied to the respective hydraulic motors Mf, Mf, Mr, Mr to thus rotate the same.

Regarding the constitutional elements configuring the vehicle body frame 12, a first vertical plate 40 is mounted at a state where the rear frame parts 16, 16 are connected at the left and right sides. The first plate 40 is configured to face the rear of the engine 13. A power transmission pulley part, which supports the pump input shaft 36 and integrally assembles the input pulley 35 of the front end of the pump input shaft 36, is flange-bonded at a side that is above the first plate 40 and at which the engine 13 is present. Also, the hydraulic pump unit P is detachably mounted to a rear-side surface, which is opposite to the side at which the engine 13 is present. In the meantime, the power transmission belt 34 is put on the output pulley 33 and the input pulley 35 of the crankshaft 22 of the engine 13 therebetween in the vertical direction and is configured to transmit the rotation of the output pulley 33 through the input pulley 35, thereby driving a pump part of the hydraulic pump unit P.

Like this, the input pulley 35 and the pump input shaft 36 are mounted at the front and the hydraulic pump unit P is mounted at the rear with the first vertical plate 40 being interposed therebetween, and the output pulley 33 and the input pulley 35 of the crankshaft 22 can be arranged to overlap with each other in the vertical direction. Therefore, it is possible to simplify the configuration of mounting the hydraulic pump unit P, which is arranged at the rear of the engine 13, and to compactly configure the arrangement in the front-rear direction, thereby suppressing an increase in an overall length of the vehicle body.

The output pulley 33 of the crankshaft 22 is provided with one pulley part 37 for putting thereon the belt and is configured to drive a generator 38 that is mounted on a side surface of the engine 13.

The first plate 40 is configured to extend downwardly and to support a front end of the pivot shaft 19. The first plate 40 serves as a double purpose, so that the pivot shaft 19 can easily come close to the engine 13. In the meantime, a rear end portion of the pivot shaft 19 is supported by a second vertical plate 41 that connects the rear frame parts 16, 16.

As described above, the pivot shaft 19 has a shaft center in the front-rear direction of the vehicle body, and the rear axle 20 that supports the rear wheels 21, 21 is swingably supported to the pivot shaft 19. In the meantime, a reinforcement plate 39 that connects the first plate 40 and the second plate 41 and the left and right rear frame parts 16, 16 is provided.

An upper surface of the hydraulic pump unit P is provided with a trunnion shaft 42 having a shaft center in the upper-lower direction. By selecting a discharge flow rate and a discharge port on the basis of forward/reverse rotations of the trunnion shaft 42 and an amount of the rotation thereof, it is possible to control a flow rate to the hydraulic motor M and to select a traveling speed and forward/reverse movement.

An upper end of the trunnion shaft 42 is provided with a trunnion arm 43, which is linked to the forward and reverse pedals 9f, 9r mounted on the step 8 through a neutral return mechanism N that is mounted at a position biased to one side (a left side in the shown example) of the hydraulic pump unit P. Specifically, the trunnion arm 43 and a pin 44a of an apex part of a triangular plate 44 of the neutral return mechanism N are connected by an interlocking rod 45. The triangular plate 44 is rotatably mounted to a vertical shaft core about a support shaft 46 adjacent to a bottom side center and is appropriately fixed to a base plate 48 by winding a torque spring 47 onto the support shaft 46, and both parallel ends of the torque spring 47 are engaged to the pin 44a of the apex part of the triangular plate 44 while sandwiching the pin therebetween. When the triangular plate is rotated about the support shaft 46 and the rotation interlocking is then opened, the triangular plate is returned to a position (which is adjusted to a neutral position in advance) to which the displacement of the torque spring 47 is returned. The neutral return mechanism N is configured by the support and interlocking configurations of the triangular plate 44, the torque spring 47 and the like.

Both end sides of the bottom side of the triangular plate 44 are connected with interlocking wires 49f, 49r, respectively. The other ends of the interlocking wires 49f, 49r are connected to the forward and reverse pedals 9f, 9r arranged on the step 8. When the forward pedal 9f is stepped on, the triangular plate 44 is rotated in a counterclockwise direction about the support shaft 46 and pulls the interlocking rod 45 to thus rotate the trunnion arm 43 in the counterclockwise direction. Thereby, the trunnion shaft 42 is rotated in a forward rotating direction. When the stepping on the forward pedal 9f is released, the triangular plate 44 is returned to the neutral position by the operation of the torque spring 47 of the neutral return mechanism N, and the trunnion arm 43 and the trunnion shaft 42 are also returned to the neutral position. When the reverse pedal 9r is stepped on, the triangular plate 44 is rotated in a clockwise direction and the trunnion arm 43 and the trunnion shaft 42 are also rotated in the clockwise direction.

The interlocking mechanism to the trunnion shaft 42 and the neutral return mechanism N are arranged on the upper surface of the hydraulic pump unit P and in the vicinity thereof, so that the maintenance operation can be made from the upper and is thus easily performed.

In the meantime, the neutral state is adjusted by finely adjusting an operating length of the interlocking rod 45 or adjusting an outer wire holding position of the interlocking wire 49. Also, the speed restraint can be adjusted by adjusting the rotating angle of the triangular plate 44 by forward/reverse rotations of two adjusting bolts 50, 50 supported to the base plate 48.

When seen from the side, a bonnet 51 that covers the engine 13 and a partial side from the upper surface of the hydraulic pump unit P is configured. The bonnet 51 is configured so that a rear side thereof can be upwardly rotated and held about a front side serving as a support point. When the bonnet is downwardly returned, a stopper (not shown) is appropriately operated to restrain the bonnet from being downwardly rotated beyond a predetermined amount or larger. When opening (upwardly rotating) the bonnet 51, a rear knob 51a is lifted up with the collector 8 being raised, so that the bonnet can be opened to a desired state towards the front support point. In the meantime, a damper (not shown) is interposed between the bonnet 51 and the vehicle body, so that the opened posture of the bonnet can be maintained. At this opened state, an operator goes around to the rear of the vehicle body and can perform the repair or maintenance of the periphery of the hydraulic pump unit P from the rear of the engine 13.

An U-shaped intermediate frame 52, when seen from the plan view, is provided at a position corresponding to the upper surface of the bonnet 51 at the state where the bonnet 51 is closed. The intermediate frame 52 protects the engine 13. In addition to this, the intermediate frame enables an auxiliary machine and the like to be mounted to the periphery of the engine 13 and a traveling-system oil path to be held.

A small-diameter gear pump 55 is mounted at the rear of the hydraulic pump unit P. The gear pump 55 is configured to receive the rotating power of the pump input shaft 36 of the hydraulic pump unit P to thereby drive a pump shaft 56 in the front-rear direction and has gear pump parts 55a, 55b at the front and rear sides of the pump shaft 56 in a longitudinal direction thereof. One gear pump part 55a supplies the pressure oil to a hydraulic PTO clutch 24a (Fig. 4), which is provided on a power transmission path (not shown) facing the mower 1, a hydraulic blower clutch 23a (Fig. 4), which is provided on a power transmission path (not shown) facing the blower 2, and the like, and the other gear pump part 55b supplies the pressure oil to a steering hydraulic cylinder mechanism 57, a mower lifting hydraulic cylinder mechanism 58, the lifting cylinder mechanism 30/dump cylinder mechanism 31 of the collector 3 and the like. In the meantime, the inside of the hydraulic pump unit P and the inside of the gear pump 55 are disconnected from each other to thus remove mutual circulation of operating oil and thus can use the operating oils having different viscosities. The operating oil having a high viscosity is used for the clutch part.

At one of the left and right sides of the hydraulic pump unit P, which is opposite to the neutral return mechanism N, an exhaust pipe 59a of a muffler 59 of the engine 13 is obliquely arranged so that a rear side thereof is located at a lower position.

A rear end of the bonnet 52 is formed so that an upper surface thereof is downwardly inclined and a left-right width thereof is narrow. Owing to the downward inclination, in a space part that is largely opened by the lifting-up of the collector 3 upon the upward rotation of the bonnet, the rotating angle of the bonnet 52 can be made to be large so that it comes close to the bottom of the collector 3 and an operator can introduce the body to the upper of the engine 13 or hydraulic pump unit P, so that it is possible to easily perform the maintenance operation.

The rear wheels 21, 21 and the hydraulic motors Mr, Mr driving the rear wheels are steering-rotatably mounted to left and right end portions of the rear axle 20 through steering support members such as kingpins 60, 60 for steering rotation, the steering hydraulic cylinder mechanism 57 is provided at a center of a tie rod 61 connecting the steering support members of the left and right wheels at the left and right sides, and the steering hydraulic cylinder mechanism 57 is appropriately integrally held to the rear axle 20, so that the steering hydraulic cylinder mechanism 57 is slid in the left and right directions in conjunction with the left and right rotating operation of the steering wheel 6 and the rear wheels 21, 21 can be thus steered (a steering mechanism S).

In a mower deck 1a of the mower 1, two blades are rotatably supported about a vertical shaft, the power is transmitted to one side (the left side in the shown example) of the vertical shaft from the power transmission case 14 via the second power transmission output shaft 24 and the power is branched and transmitted to another vertical shaft. The mower deck 1a is connected with lifting links 65, 65 connected to the front frame parts 15, 15 and the lifting links 65, 65 are configured to vertically rotate about the connection part with the front connection parts 15, 15, so that the mower deck 1a can be changed between a grounded operation posture and a non-grounded operation posture. In the meantime, the mower lifting hydraulic cylinder mechanism 58 is provided between operation arm parts 65a of the lifting links 65, 65 and the vehicle body, so that the mower deck 1a can be lifted up and down by the expansion and contraction operation of the mower lifting hydraulic cylinder mechanism 58.

V-shaped frame parts 66, 66 having integrally rigidified a front bent frame part and a vertical frame part are respectively provided for the front frame parts 15 at the left and the right and the V-shaped frame parts 66, 66 are connected to each other by a horizontal frame part 67 to thus configure strut bases 68, 68, thereby rigidly supporting the base parts of the support struts 26, 26. In the meantime, an opening/closing support shaft (not shown) of the bonnet 51 is formed using the horizontal frame part 67 or a bracket extending from the horizontal frame part 67, and the rear side of the bonnet 51 can be largely upwardly rotated on condition that the collector 4 is located at a raised posture.

The rear ends of the rear frame parts 16, 16 are connected and rigidified by a lateral frame part 70 that is longer than a left-right interval of the rear frame parts. The lateral frame part 70 is configured to bear a lower end of a rear surface-side of the bonnet 51, and elastic bearing parts 71, 71 protruding rearwards from the lateral frame part 70 are configured to bear the load upon the descent of the collector 3.

## Claims

1. A working vehicle comprising:
hydraulic motors (Mr, Mr) configured to drive left and right rear wheels (21, 21); and
a hydraulic pump unit (P) configured to supply pressure oil to rotate the respective hydraulic motors (Mr, Mr), wherein
the rear wheels (21, 21) are supported at both sides of a wheel support frame (20) configured to oscillate around a shaft center of a front-rear direction; and
the hydraulic pump unit (P) is arranged above the wheel support frame (20), the working vehicle further includes:
a mower (1) that harvests lawns;
a blower (2) that conveys the mowed lawns;
a collector (3) that accommodates therein the mowed lawns;
a mower lifting hydraulic cylinder mechanism (58) configured to lift up and down the mower (1); and
a lifting cylinder mechanism (30) and a dump cylinder mechanism (31) of the collector (3);
**characterized by**
**a gear pump (55) comprising gear pump parts (55a, 55b); wherein**
a pump shaft (56) **of the gear pump (55)** is driven by receiving the rotating power of the pump input shaft (36) of the hydraulic pump unit (P);
**one** gear pump part (55a) supplying pressure oil to a hydraulic PTO clutch (24a), which is provided on a power transmission path facing the mower (1) and a hydraulic blower clutch (23a), which is provided on a power transmission path facing the blower (2); and
**the other** gear pump part (55b) supplying pressure oil to **a steering hydraulic cylinder mechanism (57),** the mower lifting hydraulic cylinder mechanism (58), the lifting cylinder mechanism (30) and the dump cylinder mechanism (31) of the collector (3).

2. The working vehicle according to claim 1, wherein:
the rear wheel support frame (20) that comes close to a rear of an engine (13) and oscillates around a pivot shaft (19) having the shaft center of a front-rear direction is provided; and
the rear wheels are supported to both sides of the wheel support frame (20) so that the rear wheels are steering-interlocked in a left or right direction by a steering mechanism (S).

3. The working vehicle according to claim 2, further comprising:
a pair of frame parts (16, 16) connected to left and right sides of the engine (13) and opposed to each other in a left-right direction; and
a first vertical plate (40) connecting the pair of frame parts (16, 16), wherein
the hydraulic pump unit (P) is detachably mounted to an upper part of the first plate (40).

4. The working vehicle according to claim 3, further comprising
an input pulley (35) configured to interlock with a crankshaft (22) of the engine (13) and drive the hydraulic pump unit (P) through the pump input shaft (36), wherein the input pulley (35) is supported at a side at which the engine (13) is present and which is opposite to the side of the first vertical plate (40), to which the hydraulic pump unit (P) is mounted.

5. The working vehicle according to claim 3, further comprising
an end portion of the pivot shaft (19) supported below the first vertical plate (40), wherein
the other end of the pivot shaft (19) is supported by a second vertical plate (41) that is appropriately spaced from the first plate (40).

6. The working vehicle according to one of claims 1 to 5, further comprising:
a trunnion shaft (42) upwardly arranged on a casing upper surface of the hydraulic pump unit (P); and
a neutral return mechanism (N) provided at a side of the hydraulic pump unit (P); wherein
the trunnion shaft (42) and the neutral return mechanism (N) are linked.

7. The working vehicle according to claim 4, wherein the gear pump (55) is detachably mounted to a side of the hydraulic pump unit (P), wherein
the pump input shaft (36) of the hydraulic pump unit (P) is configured to drive the gear pump shaft (56).

8. The working vehicle according to any one of claims 1 to 7, wherein:
an inside of the hydraulic pump unit (P) and an inside of the gear pump (55) are disconnected from each other for removing mutual circulation of operating oil.

9. The working vehicle according to claim 8, wherein the inside of the hydraulic pump unit (P) and the inside of the gear pump (55) use operating oils having different viscosities, wherein the operating oil having a high viscosity is used for the clutch part.

## Patentansprüche

1. Nutzfahrzeug, umfassend:
Hydraulikmotoren (Mr, Mr), die eingerichtet sind, um linke und rechte Hinterräder (21, 21) anzutreiben; und
eine Hydraulikpumpeneinheit (P), die eingerichtet ist, um Drucköl bereitzustellen, um die jeweiligen Hydraulikmotoren zu drehen (Mr, Mr), wobei
die Hinterräder (21, 21) an beiden Seiten eines Räderstützrahmens (20) getragen werden, der eingerichtet ist, um um eine Wellenmitte einer vorne-hinten-Richtung zu oszillieren; und
die Hydraulikpumpeneinheit (P) oberhalb des Räderstützrahmens (20) angeordnet ist, wobei das Nutzfahrzeug weiter beinhaltet:
einen Mäher (1), der Wiesen erntet;
ein Gebläse (2), das die gemähten Wiesen fördert;
einen Sammler (3), der darin die gemähten Wiesen unterbringt;
einen Mäheranhebehydraulikzylindermechanismus (58), der eingerichtet ist, um den Mäher (1) nach oben und unten zu heben; und
einen Anhebezylindermechanismus (30) und einen Entladezylindermechanismus (31) des Sammlers (3);
**gekennzeichnet durch**
eine Getriebepumpe (55), die Getriebepumpenteile (55a, 55b) umfasst; wobei
eine Pumpenwelle (56) der Getriebepumpe (55) angetrieben wird, indem sie die Drehleistung der Pumpeneingangswelle (36) der Hydraulikpumpeneinheit (P) empfängt;
wobei ein Getriebepumpenteil (55a) eine hydraulische PTO-Kupplung (24a) die auf einem Leistungsübertragungsweg zu dem Mäher (1) zeigend bereitgestellt ist, und eine hydraulische Gebläsekupplung (23a), die auf einem Leistungsübertragungsweg zu dem Gebläse (2) zeigend bereitgestellt ist, mit Drucköl versorgt; und
das andere Getriebepumpenteil (55b) einen Lenkhydraulikzylindermechanismus (57), den Mäheranhebehydraulikzylindermechanismus (58), den Anhebezylindermechanismus (30) und den Entladezylindermechanismus (31) des Sammlers (3) mit Drucköl versorgt.

2. Nutzfahrzeug nach Anspruch 1, wobei:
der hintere Räderstützrahmen (20), der nah an ein Hinteres eines Motors (13) kommt und um eine Schwenkwelle (19) oszilliert, die die Wellenmitte einer vorne-hinten-Richtung aufweist, bereitgestellt ist; und
die Hinterräder zu beiden Seiten des Räderstützrahmens (20) derart getragen werden, dass die Hinterräder in einer links-oder-rechts-Richtung durch einen Lenkmechanismus (S) miteinander lenkgekuppelt sind.

3. Nutzfahrzeug nach Anspruch 2, weiter umfassend:
ein Paar von Rahmenteilen (16, 16), die mit linken und rechten Seiten des Motors (13) verbunden sind und sich in einer links-rechts-Richtung gegenseitig gegenüber liegen; und
eine erste vertikale Platte (40), die das Paar von Rahmenteilen (16, 16) verbindet, wobei
die Hydraulikpumpeneinheit (P) lösbar an einem oberen Teil der ersten Platte (40) montiert ist.

4. Nutzfahrzeug nach Anspruch 3, weiter umfassend:
ein Eingangsriemenscheibe (35), die eingerichtet ist, um mit einer Kurbelwelle (22) des Motors (13) gekuppelt zu werden und die Hydraulikpumpeneinheit (P) durch die Pumpeneingangswelle (36) anzutreiben, wobei
die Eingangsriemenscheibe (35) an einer Seite getragen wird, an der der Motor (13) sich befindet, und die der Seite der ersten vertikalen Platte (40), an der die Hydraulikpumpeneinheit (P) montiert ist, gegenüber liegt.

5. Nutzfahrzeug nach Anspruch 3, weiter umfassend
einen Endbereich der Schwenkwelle (19), die unterhalb der ersten vertikalen Platte (40) getragen wird, wobei
das andere Ende der Schwenkwelle (19) von einer zweiten vertikale Platte (41) getragen wird, die entsprechend von der ersten Platte (40) beabstandet ist.

6. Nutzfahrzeug nach einem der Ansprüche 1 bis 5, weiter umfassend:
eine Zapfenwelle (42), die nach oben hin auf einer oberen Gehäuseoberfläche der Hydraulikpumpeneinheit (P) angeordnet ist; und
einen neutralen Rückstellmechanismus (N), der an einer Seite der Hydraulikpumpeneinheit (P) bereitgestellt ist; wobei
die Zapfenwelle (42) und der neutrale Rückstellmechanismus (N) in Verbindung stehen.

7. Nutzfahrzeug nach Anspruch 4, wobei die
Getriebepumpe (55) lösbar an einer Seite der Hydraulikpumpeneinheit (P) montiert ist, wobei
die Pumpeneingangswelle (36) der Hydraulikpumpeneinheit (P) eingerichtet ist, um die Hydraulikpumpenwelle (56) anzutreiben.

8. Nutzfahrzeug nach einem der Ansprüche 1 bis 7, wobei:
ein Inneres der Hydraulikpumpeneinheit (P) und ein Inneres der Getriebepumpe (55) von einander getrennt sind, um gegenseitige Zirkulation von Arbeitsöl zu beseitigen.

9. Nutzfahrzeug nach Anspruch 8, wobei das ein Innere der Hydraulikpumpeneinheit (P) und das Innere der Getriebepumpe (55) Arbeitsöle verwenden, die verschiedene Viskositäten aufweisen, wobei das Arbeitsöl, das eine hohe Viskosität aufweist, für das Kupplungsteil verwendet wird.

## Revendications

1. Véhicule de travail comprenant :
des moteurs hydrauliques (Mr, Mr) configurés pour entraîner des roues arrière gauche et droite (21, 21) ; et
une unité de pompe hydraulique (P) configurée pour fournir de l'huile sous pression afin de faire tourner les moteurs hydrauliques respectifs (Mr, Mr), dans lequel
les roues arrière (21, 21) sont supportées des deux côtés d'un châssis de support de roues (20) configuré pour osciller autour d'un centre d'arbre d'une direction avant-arrière ; et
l'unité de pompe hydraulique (P) est disposée au-dessus du châssis de support de roues (20), le véhicule de travail comprend en outre :
une tondeuse (1) qui récolte les pelouses ;
une soufflante (2) qui transporte les pelouses tondues ;
un collecteur (3) qui reçoit en son sein les pelouses tondues ;
un mécanisme de vérin hydraulique de levage de tondeuse (58) configuré pour lever et abaisser la tondeuse (1) ; et
un mécanisme de vérin de levage (30) et un mécanisme de vérin de vidage (31) du collecteur (3) ;
**caractérisé par**
une pompe à engrenages (55) comprenant des parties de pompe à engrenages (55a, 55b) ; dans lequel
un arbre de pompe (56) de la pompe à engrenages (55) est entraîné en recevant la puissance de rotation de l'arbre d'entrée de pompe (36) de l'unité de pompe hydraulique (P) ;
une partie de pompe à engrenages (55a) fournissant de l'huile sous pression à un embrayage de prise de force, PTO, hydraulique (24a), qui est prévue sur un chemin de transmission de puissance faisant face à la tondeuse (1) et un embrayage de soufflante hydraulique (23a), qui est fourni sur un trajet de transmission de puissance faisant face à la soufflante (2) ; et
l'autre partie de pompe à engrenages (55b) fournissant de l'huile sous pression à un mécanisme de vérin hydraulique de braquage (57), au mécanisme de vérin hydraulique de levage de tondeuse (58), au mécanisme de vérin de levage (30) et au mécanisme de vérin de vidage (31) du collecteur (3).

2. Véhicule de travail selon la revendication 1, dans lequel :
le châssis de support de roues arrière (20) qui vient près de l'arrière d'un moteur (13) et oscille autour d'un arbre de pivotement (19) ayant le centre d'arbre d'une direction avant-arrière est fourni ; et
les roues arrière sont supportées des deux côtés du châssis de support de roues (20) de sorte que les roues arrière sont verrouillées mutuellement en braquage dans un direction gauche ou droite par un mécanisme de braquage (S).

3. Véhicule de travail selon la revendication 2, comprenant en outre :
une paire de parties de châssis (16, 16) reliées aux côtés gauche et droit du moteur (13) et opposées l'une à l'autre dans une direction gauche-droite ; et
une première plaque verticale (40) reliant la paire de parties de châssis (16, 16), dans lequel
l'unité de pompe hydraulique (P) est montée de manière amovible sur une partie supérieure de la première plaque (40).

4. Véhicule de travail selon la revendication 3, comprenant en outre :
une poulie d'entrée (35) configurée pour un verrouillage mutuel avec un vilebrequin (22) du moteur (13) et pour entraîner l'unité de pompe hydraulique (P) via l'arbre d'entrée de pompe (36), dans lequel
la poulie d'entrée (35) est supportée sur un côté au niveau duquel le moteur (13) est présent et qui est opposé au côté de la première plaque verticale (40), sur lequel l'unité de pompe hydraulique (P) est montée.

5. Véhicule de travail selon la revendication 3, comprenant en outre
une partie d'extrémité de l'arbre de pivotement (19) supportée au-dessous de la première plaque verticale (40), dans lequel
l'autre extrémité de l'arbre de pivotement (19) est supportée par une seconde plaque verticale (41) qui est espacée de manière appropriée de la première plaque (40).

6. Véhicule de travail selon l'une des revendications 1 à 5, comprenant en outre :
un arbre de tourillon (42) disposé vers le haut sur une surface supérieure de boîtier de l'unité de pompe hydraulique (P) ; et
un mécanisme de retour au neutre (N) prévu sur un côté de l'unité de pompe hydraulique (P) ; dans lequel
l'arbre de tourillon (42) et le mécanisme de retour au neutre (N) sont reliés.

7. Véhicule de travail selon la revendication 4, dans lequel la pompe à engrenages (55) est montée de manière amovible sur un côté de l'unité de pompe hydraulique (P), dans laquelle
l'arbre d'entrée de pompe (36) de l'unité de pompe hydraulique (P) est configuré pour entraîner l'arbre de pompe à engrenages (56).

8. Véhicule de travail selon l'une quelconque des revendications 1 à 7, dans lequel :
un intérieur de l'unité de pompe hydraulique (P) et un intérieur de la pompe à engrenages (55) sont déconnectés l'un de l'autre pour éliminer une circulation mutuelle de l'huile de fonctionnement.

9. Véhicule de travail selon la revendication 8, dans lequel l'intérieur de l'unité de pompe hydraulique (P) et l'intérieur de la pompe à engrenages (55) utilisent des huiles de fonctionnement ayant des viscosités différentes, dans lequel l'huile de fonctionnement ayant une viscosité élevée est utilisée pour la pièce d'embrayage.
